# EUROPÄISCHE PATENTSCHRIFT

(11) **EP 4 048 111 B1**
(45) Veröffentlichungstag und Bekanntmachung des Hinweises auf die Patenterteilung: **08.04.2026**
(21) Anmeldenummer: 20796781.1
(22) Anmeldetag: 22.10.2020
(51) Int. Cl.: A44B 11/25, B60R 13/00, B60R 13/04, B60R 13/02

(54) **ZIERLEISTE UND STECKVERBINDUNG FÜR EINE KRAFTFAHRZEUGKAROSSERIE**
TRIM STRIP AND PLUG-IN CONNECTOR FOR MOTOR VEHICLE BODYWORK
BANDE DE FINITION ET CONNECTEUR ENFICHABLE POUR COQUE DE VÉHICULE À MOTEUR

(30) Priorität: 25.10.2019 DE 102019216483
(43) Veröffentlichungstag der Anmeldung: 31.08.2022
(73) Patentinhaber: Stellantis Auto SAS, 78300 Poissy (FR)
(72) Erfinder: MIELKE, Alexej, 65428 Rüsselsheim am Main (DE)
(74) Vertreter: BCIP
(86) Internationale Anmeldenummer: PCT/EP2020/079752
(87) Internationale Veröffentlichungsnummer: WO 2021/078860

(56) Entgegenhaltungen:
- EP-A1- 3 210 862
- DE-A1- 102007 041 538
- DE-A1- 2 328 370
- DE-A1- 2 330 202
- DE-T2- 60 306 317

## Beschreibung

### Technisches Gebiet

Die vorliegende Entwicklung betrifft eine Zierleiste für eine Kraftfahrzeugkarosserie und ein zugehöriges Kraftfahrzeug.

### Hintergrund

Aus der DE 10 2013 223 358 B4 ist beispielsweise eine Vorrichtung zur Befestigung einer Zierleiste an einem Fahrzeugaußenhautelement bekannt. Ein Endabschnitt eines Zierleistenkörpers ist hierbei mit einer Bohrung versehen, in die ein Befestigungsstift einer jeweiligen Endkappe eingesteckt werden kann, um die Endkappe mit dem Zierleistenelement zumindest kraftschlüssig wieder lösbar verbinden zu können.

Ferner ist aus der DE 603 06 317 T2 einer Zierleiste für ein Fensterglases eines Fahrzeugs bekannt.

Für eine besonders einfache und rationale sowie kostengünstige Fertigung von Zierleisten zur Anordnung im oder am Außenbereich einer Kraftfahrzeugkarosserie kann es vorteilhaft und erstrebenswert sein, die Zierleiste mehrteilig auszugestalten und mehrere Leistenabschnitte beispielsweise mittels einer Steckverbindung im Zuge einer Montage oder vor einer Montage am Kraftfahrzeug miteinander zu verbinden.

Insoweit liegt der vorliegenden Weiterentwicklung die Aufgabe zugrunde, eine mehrteilige Zierleiste mit einer Steckverbindung bereitzustellen, die besonders einfach zusammengefügt und im Bedarfsfall auch wieder vergleichsweise einfach gelöst werden kann. Die Steckverbindung soll sich ferner durch ein hohes Maß an mechanischer Stabilität sowie durch eine hohe Lebensdauer auszeichnen. Sie soll sich insbesondere für den Einsatz und für die Montage im oder am Außenbereich einer Kraftfahrzeugkarosserie eignen.

Die Steckverbindung soll ferner eine unmittelbare Anordnung mehrerer Leistenabschnitte einer Zierleiste an der Kraftfahrzeugkarosserie ermöglichen, wobei eine Verbindung der Leistenabschnitt untereinander erst oder während der Montage an der Kraftfahrzeugkarosserie erfolgen kann. Insoweit ist es Zielsetzung, den Montageprozess zur Fertigung der Zierleiste als auch deren Anordnung an der Kraftfahrzeugkarosserie zu vereinfachen. Es ist insoweit Zielsetzung, Herstellungs- und Produktionskosten eines Kraftfahrzeugs zu senken.

### Vorteilhafte Ausgestaltungen

Diese Aufgabe wird mit einer Zierleiste und mit einem Kraftfahrzeug gemäß den Merkmalen des unabhängigen Patentanspruchs 1 gelöst. Vorteilhafte Ausgestaltungen sind dabei jeweils Gegenstand abhängiger Patentansprüche.

Nach einem ersten Aspekt der vorliegenden Weiterentwicklung ist eine mehrteilige Zierleiste mit einer Steckverbindung vorgesehen. Die Steckverbindung weist ein Einsteckteil und ein Aufnahmeteil auf. Das Einsteckteil weist einen längserstreckten Einsteckzapfen auf, welcher in Längsrichtung in eine korrespondierend oder komplementär zum Einsteckzapfen ausgebildete Aufnahme des Aufnahmeteils einführbar ist. Der Einsteckzapfen weist eine Oberseite und eine gegenüberliegende Unterseite auf. Der Einsteckzapfen weist ferner zwei zueinander gegenüberliegende Außenseiten, beispielsweise eine linke Außenseite und eine rechte Außenseite auf. Die Außenseiten erstrecken sich zwischen der Oberseite und der Unterseite. Sie erstrecken sich insbesondere entlang den Seitenrändern von Oberseite und Unterseite. Mithin geht die Oberseite über die gegenüberliegenden Außenseiten in die Unterseite über; und umgekehrt.

Die Aufnahme weist korrespondierend zum Einsteckzapfen eine Oberseite und zwei hieran gegenüberliegend angrenzende und demzufolge auch zueinander gegenüberliegende Seitenwangen auf. Der Oberseite abgewandt weisen die Seitenwangen jeweils einen Fortsatz auf. Der Fortsatz der einen Seitenwange erstreckt sich zur gegenüberliegenden Seitenwange. Der Fortsatz der anderen Wange erstreckt sich ebenfalls zur gegenüberliegenden Seitenwange. Die Fortsätze der beiden Seitenwangen erstrecken sich zu jeweils gegenüberliegenden Seitenwangen. Sie befinden sich typischerweise an einem der Oberseite abgewandten Endabschnitt der jeweiligen Seitenwangen.

An der Unterseite des Einsteckzapfens ist zumindest ein Rastelement ausgebildet oder angeordnet. Das Rastelement ist zur Bildung einer formschlüssigen Verbindung von Einsteckteil und Aufnahmeteil mit einem korrespondierend zum Rastelement ausgebildeten Gegenrastelement rastend in Eingriff bringbar. Das Gegenrastelement ist an zumindest einer der Seitenwangen oder an zumindest einem der Fortsätze vorgesehen, ausgebildet oder angeordnet. Gegenrastelement und Rastelement können rastend und demgemäß formschlüssig ineinandergreifen, um in Bezug auf die Längsrichtung von Einsteckteil und Aufnahmeteil eine formschlüssige Verbindung zu bilden, die erst wieder durch Überführen von zumindest einem von Rastelement und Gegenrastelement in eine Lösestellung gelöst werden kann.

In einer Endmontagekonfiguration am Kraftfahrzeug, mithin an der Kraftfahrzeugkarosserie weist die Unterseite des Einsteckzapfens in Richtung zur Außenseite der Kraftfahrzeugkarosserie. Die Oberseite der Aufnahme ist in Endmontagestellung an der Kraftfahrzeugkarosserie von außen sichtbar.

Von außen betrachtet oder von oben betrachtet weist die Oberseite eine durchgehende Fläche auf, welche das äußere Erscheinungsbild der mehrteiligen Zierleiste prägt oder bildet. Die im oder am Aufnahmeteil ausgebildete Aufnahme weist ein im Querschnitt C-förmiges Profil auf, wobei die Oberseite zwischen den gegenüberliegenden Seitenwangen liegt. Die Fortsätze an den Seitenwangen können sich annähernd oder im Wesentlichen parallel zur Ebene der Oberseite erstrecken. In einer Endmontagekonfiguration, in welcher der Einsteckzapfen in die Aufnahme eingeführt ist, können die Seitenwangen mit ihren nach innen ragenden Fortsätzen beispielsweise die Außenseiten des Einsteckzapfens in Umfangsrichtung betrachtet umschließen oder zumindest bereichsweise übergreifen.

Auf diese Art und Weise kann insbesondere bei einer passgenaue Ausgestaltung von Aufnahme und Einsteckzapfen eine Gleitführung für den Einsteckzapfen bereitgestellt werden, welche typischerweise in Längsrichtung in die Aufnahme des Aufnahmeteils einführbar, insbesondere gleitend einsteckbar ist, bis eine Endmontagestellung erreicht ist, in welcher das zumindest eine am Einsteckzapfen ausgebildete oder hieran angeordnete Rastelement mit dem korrespondierend oder komplementär hierzu ausgestalteten Gegenrastelement der Aufnahme bzw. des Aufnahmeteils in Eingriff gelangt. Der wechselseitige Eingriff von Rastelement und Gegenrastelement bewirkt eine wechselseitige Fixierung von Aufnahmeteil und Einsteckteil bezüglich der Längsrichtung von Aufnahmeteil und/oder Einsteckteil.

Dadurch dass das zumindest eine Rastelement an der Unterseite des Einsteckzapfens angeordnet ist kann es von unten her zugänglich ausgestaltet sein, sodass etwa bei einer von der Kraftfahrzeugkarosserie demontierten Zierleiste, bei welcher das Einsteckteil und das Aufnahmeteil nach wie vor über das zumindest eine Rastelement und das zumindest eine Gegenrastelement formschlüssig miteinander verbunden sind, zumindest eines von Rastelement und Gegenrastelement von unten zugänglich von einem Endanwender oder Monteur manuell in eine Lösestellung überführbar ist, in welcher das Rastelement das Gegenrastelement freigibt; oder umgekehrt. Alsdann kann der Einsteckzapfen entgegen der ursprünglichen Montagerichtung aus der Aufnahme herausgezogen werden. Dies ermöglicht letztlich eine zerstörungsfreie Demontage der mehrteiligen Zierleiste.

Es ist insbesondere von Vorteil, wenn das Gegenrastelement an zumindest einem der nach innen ragenden und von den Seitenwangen nach innen abragenden Fortsätze der Aufnahme ausgebildet oder angeordnet ist. Denn auch die nach innen ragenden Fortsätze der Aufnahme können bei einer demontierten Zierleiste von unten besonders leicht zugänglich sein. Die miteinander rastend in Eingriff gelangenden Elemente, nämlich das zumindest eine Rastelement und das zumindest eine Gegenrastelement können insbesondere außerhalb der von außen sichtbaren Flächen von Einsteckteil und Aufnahmeteil angeordnet oder ausgebildet sein, sodass die Art und Weise der wechselseitigen Verbindung von Einsteckteil und Aufnahmeteil von außen und bei einem an der Kraftfahrzeugkarosserie montierten Zierleiste nicht sichtbar sind.

Nach einer weiteren Ausgestaltung weist das Rastelement zumindest eine quer oder senkrecht zur Längsrichtung bewegliche oder deformierbare Federzunge mit einem Endanschlag auf. Die Federzunge ist typischerweise zwischen einer Raststellung und einer Lösestellung beweglich bzw. deformierbar am Einsteckteil angeordnet oder hieran angeformt. Im Zuge einer Montagebewegung kann die Federzunge mit einer Anlaufschräge am Gegenrastelement der Aufnahme entlanggleiten. Mit Erreichen einer Endmontagestellung kann die Federzunge in die Raststellung springen und mit dem Gegenrastelement der Aufnahme verrasten. In der Endmontagestellung von Einsteckteil und Aufnahmeteil, insbesondere wenn sich die Federzunge in ihrer Raststellung befindet, liegt der Endanschlag an einem Gegenanschlag des Gegenrastelements an oder er stützt sich hieran ab. Der Endanschlag und der Gegenanschlag grenzen in Längsrichtung von Einsteckteil und Aufnahmeteil unmittelbar aneinander an, sodass sich der Endanschlag in Längsrichtung an Gegenanschlag abstützt; und umgekehrt.

Nach einer weiteren Ausgestaltung weist der Endanschlag eine Anschlagsfläche mit einer Flächennormalen auf, die in Längsrichtung entgegen einer Einführrichtung des Einsteckteils in das Aufnahmeteil ausgerichtet ist. Der Endanschlag fungiert somit als eine Art Widerhaken. Er ist entgegen der Einführrichtung in das Aufnahmeteil ausgerichtet und verhindert, eine Anlagestellung am Gegenanschlag vorausgesetzt, ein Herausziehen des Einsteckzapfens aus der Aufnahme des Aufnahmeteils.

Nach einer weiteren Ausgestaltung weist das Gegenrastelement zumindest eine sich quer oder senkrecht zur Längsrichtung erstreckende Aussparung mit dem bereits erwähnten Gegenanschlag auf. Die Aussparung erstreckt sich typischerweise entweder an der Innenseite einer Seitenwange oder angrenzend an einen Innenrand eines der an den Seitenwangen vorgesehenen und sich nach innen erstreckenden Fortsätze. Der Gegenanschlag des Gegenrastelements ist typischerweise korrespondierend bzw. komplementär zum Endanschlag des Rastelement ausgestaltet bzw. ausgebildet. Auf diese Art und Weise können der Endanschlag und der Gegenanschlag bei Erreichen einer Endmontagestellung von Einsteckteil und Aufnahmeteil in Längsrichtung abstützend aneinander anliegen und so ein Herausgleiten oder Herausziehen des Einsteckteils aus der Aufnahme verhindern oder blockieren.

Nach einer weiteren Ausgestaltung weist der Gegenanschlag eine Anschlagsfläche mit einer Flächennormalen auf, die in Längsrichtung entlang der Einführrichtung des Einsteckteils in das Aufnahmeteil ausgerichtet ist. Die Flächennormale der Anschlagsfläche des Gegenanschlags erstreckt sich entgegengesetzt der Flächennormalen der Anschlagsfläche des Endanschlags. Auf diese Art und Weise kann eine wechselseitige und in Längsrichtung wirkende Abstützung von Rastelement und Gegenrastelement in Längsrichtung von Einsteckteil und/oder Aufnahmeteil bereitgestellt werden.

Alternativ kann vorgesehen sein, dass das Rastelement nicht aufseiten des Einsteckteils sondern aufseiten der Aufnahme angeordnet ist und dass das hierzu korrespondierende oder komplementär ausgestaltete Gegenrastelement nicht am Aufnahmeteil sondern am Einsteckteil ausgebildet oder angeordnet ist. Insoweit kann auch eine quasi kinematische Umkehr von Rastelement und Gegenrastelement an dem Einsteckteil und an dem Aufnahmeteil vorgesehen sein. Es ist grundsätzlich denkbar, dass das Rastelement und/oder seine bewegliche oder deformierbare Federzunge an der Aufnahme, insbesondere an einer Seitenwange oder an einem Fortsatz der Aufnahme angeordnet oder ausgebildet ist und dass das hierzu korrespondierende Gegenrastelement an der Unterseite des Einsteckzapfens angeordnet oder ausgebildet ist.

Erfindungsgemäß ist das zumindest eine Rastelement gegenüber den gegenüberliegenden Außenseiten des Einsteckzapfens zurückversetzt angeordnet. Das zumindest eine Gegenrastelement ist dabei an einem Innenrand des Fortsatzes angeordnet oder ausgebildet. Mit dem Innenrand des Fortsatzes ist hierbei jener Rand des Fortsatzes gemeint, welcher der an den Fortsatz angrenzenden Seitenwange abgewandt ist. Bei einer sich in etwa C-Profil artig ausgestalteten Aufnahme erstrecken sich zum Beispiel die Seitenwangen parallel zueinander. An den der Oberseite abgewandten Enden der Seitenwangen erstrecken sich aufeinander zugewandte Fortsätze.

Die einander zugewandten Innenseiten der Fortsätze bilden die zuvor erwähnten Innenränder, an welchem das zumindest eine Gegenrastelement angeordnet oder ausgebildet ist. Das Gegenrastelement kann in einen Innenrand eines der Fortsätze oder auch in die Innenränder beider Fortsätze eingebettet oder eingelassen sein. Die gegenüber den Außenseiten zurückversetzte Anordnung des Rastelements ist insoweit von Vorteil, als dass hierbei das Rastelement nicht von der Außenseite des Einsteckzapfens hervorsteht.

Auf diese Art und Weise kann eine etwaige Beschädigung eines ansonsten von der Außenseite des Einsteckzapfens hervorstehenden Rastelements effektiv vermieden werden. Ferner kann durch das nicht von der Außenseite hervorstehende Rastelement eine möglicherweise vom Rastelement ausgehende Verletzungsgefahr gemindert werden. Die innenliegende Anordnung des Rastelements ist ferner für eine von außen nicht sichtbare Verrastung von Rastelement und Gegenrastelement von Vorteil. So kann das mit dem Rastelement korrespondierende Gegenrastelement in einem von außen nicht sichtbaren Bereich der Aufnahme angeordnet oder ausgebildet sein.

Nach einer weiteren Ausgestaltung weist der Einsteckzapfen einen Sockelabschnitt auf, der in Längsrichtung über einen Mittelabschnitt in einen Kopfabschnitt übergeht. Der Kopfabschnitt bildet dabei ein freies Ende des Einsteckzapfens. Das zumindest eine Rastelement ist ferner am Kopfabschnitt angeordnet und erstreckt sich in Längsrichtung des Einsteckteils in den Mittelabschnitt hinein. Ein freies Ende des Rastelements befindet sich typischerweise im Bereich des Mittelabschnitts. Ein Sockel oder Führungsabschnitt des Rastelements ist typischerweise am Kopfabschnitt angeordnet oder einstückig mit dem Kopfabschnitt ausgebildet, bzw. hieran angeformt.

Die Federzunge weist folglich ein im Bereich des Mittelabschnitt liegendes bewegliches oder deformierbare freies Ende auf. Der Endanschlag der Federzunge befindet sich typischerweise an dem freien Ende der Federzunge, welches im Bereich des Mittelabschnitt des Einsteckzapfens liegt. Der Endanschlag der Federzunge kann insbesondere zum Sockelabschnitt des Einsteckzapfens weisen oder in Richtung zum Sockelabschnitt ausgerichtet sein. Auf diese Art und Weise kann eine in Längsrichtung gerichtete wechselseitige Abstützung von Rastelement und Gegenrastelement bereitgestellt werden.

Nach einer weiteren Ausgestaltung ist an dem Kopfabschnitt zumindest ein sich von der Unterseite erstreckender Steg mit einer Anlaufschräge angeordnet oder ausgebildet. Die Anlaufschräge erstreckt sich schräg bzw. senkrecht zur Ebene der Unterseite des Einsteckzapfens.

Der sich von der Unterseite erstreckende Steg kann von der Unterseite des Einsteckzapfens hervorstehen. Zum freien Ende des Kopfabschnitts hin kann sich der Steg verjüngen. Dies ermöglicht ein besonders einfaches Einführen des Einsteckzapfens in die Aufnahme des Aufnahmeteils. Über die Anlaufschräge des Stegs kann eine Zentrierung senkrecht oder quer zur Längsrichtung von Einsteckteil und Aufnahmeteil erreicht werden.

Nach einer weiteren Ausgestaltung ist der zumindest eine Steg mit einem Innenrand des an den Seitenwangen der Aufnahme ausgestalteten Fortsatzes in Eingriff bringbar. Ferner oder alternativ hierzu kann vorgesehen sein, dass der Steg mit einer zur Oberseite der Aufnahme weisenden Seite des Fortsatzes der Seitenwangen gleitend in Eingriff bringbar ist.

Wenn der Steg mit einer Außenseite typischerweise mit einem Innenrand des Fortsatzes gleitend in Eingriff gebracht wird kann mittels des nach unten von der Unterseite hervorstehenden Stegs des Kopfabschnitts eine Zentrierung quer bzw. senkrecht zur Montagerichtung, insbesondere in Querrichtung der Aufnahme erfolgen.

Nach einer weiteren Ausgestaltung können an der Unterseite zwei sich in etwa parallel erstreckende Stege mit jeweils einer Anlaufschräge angeordnet oder ausgebildet sein. Ein linker Steg kann beispielsweise mit einem Innenrand eines linken Fortsatzes einer linken Seitenwangen der Aufnahme gleitend in Eingriff gebracht werden während ein gegenüberliegender rechter Steg mit dem Innenrand eines rechten Fortsatzes einer rechten Seitenwange gleitend in Eingriff bringbar ist. Auf diese Art und Weise kann eine wechselseitige Zentrierung von Einsteckteil und Aufnahmeteil quer zur Einsteckrichtung, bzw. quer zur Längsrichtung von Einsteckteil und Aufnahmeteil bereitgestellt werden.

Nach einer weiteren Ausgestaltung weist der Mittelabschnitt des Einsteckzapfens einen längserstreckten Steg auf, welcher sich vom Kopfabschnitt in den Sockelabschnitt erstreckt. Mittels des längserstreckten Steaks kann eine Versteifung oder Aussteifung des Einsteckteils erreicht werden. Die mechanischen Struktursteifigkeit des Einsteckteil kann auf diese Art und Weise gesteigert werden. Seitlich des längserstreckten Steaks können nach einer weiteren Ausgestaltung Aussparungen oder sogar auch Durchgangsöffnungen im Einsteckteils vorgesehen oder ausgebildet sein. Auf diese Art und Weise lässt sich das Gewicht des Einsteckteil in vorteilhafter Weise reduziert werden.

Der längserstreckte Steg befindet sich typischerweise an der Unterseite des Einsteckteils. Er kann ähnlich wie das zumindest eine Rastelement von der Unterseite des Einsteckteils hervorstehen und insoweit zur Aussteifung des Einsteckteils beitragen.

Nach einer weiteren Ausgestaltung weist der zuvor beschriebenen Steg im Bereich des Sockelabschnitts einen sich quer oder senkrecht zur Längsrichtung erstreckende Stegabschnitt auf, welcher in Montagestellung von Einsteckteil und Aufnahmeteil an den zueinander gegenüberliegenden Innenseiten oder Innenrändern der Fortsätze anliegt. Auf diese Art und Weise können insbesondere die Außenseiten des sich zum Beispiel quer oder senkrecht zur Längsrichtung erstreckenden Stegabschnitts in Querrichtung an den Innenseiten der Fortsätze anliegen und insoweit eine wechselseitige Zentrierung von Einsteckteil und Aufnahmeteil in Querrichtung bereitstellen.

Der sich quer oder senkrecht zur Längsrichtung erstreckende Stegabschnitt kann einstückig mit einem längserstreckten Stegabschnitt des Stegs verbunden sein. Insbesondere kann der am oder im Mittelabschnitt vorgesehene Steg T-förmige Geometrie oder Kontur aufweisen, die einerseits zu einer mechanischen Aussteifung des Einsteckteils und andererseits zu einer wechselseitigen Zentrierung von Einsteckteil und Aufnahmeteil quer oder senkrecht zur Einsteckrichtung beiträgt.

Nach einer weiteren Ausgestaltung ist die Oberseite des Einsteckzapfens gleitend mit der Innenseite der Oberseite der Aufnahme in Eingriff bringbar. Ergänzend hierzu oder alternativ hierzu sind die gegenüberliegenden Außenseiten des Einsteckzapfens gleitend mit den Innenseiten der Seitenwangen der Aufnahme des Aufnahmeteils in Eingriff bringbar. Die Oberseite des Einsteckzapfens und die Innenseite der Oberseite der Aufnahme können mit entsprechenden Gleitflächen versehen sein, sodass eine besonders einfache gleitende Aufnahme des Einsteckzapfens in der Aufnahme des Aufnahmeteils erfolgen kann.

Gleichermaßen können auch die gegenüberliegenden Außenseiten des Einsteckzapfens und die Innenseiten der Seitenwangen mit entsprechenden, typischerweise miteinander korrespondierenden oder komplementär zueinander ausgestalteten Gleitflächen versehen sein. Auf diese Art und Weise können besonders geringe Fügekräfte realisiert werden, sodass der Einsteckzapfen besonders leichtgängig in die Aufnahme einführbar ist und im Endeffekt recht geringe Montagekräfte für die wechselseitige Montage von Einsteckteil und Aufnahmeteil ausreichend sind.

Nach einer weiteren Ausgestaltung der Steckverbindung ist an der Unterseite des Einsteckzapfens ein erstes, bereits zuvor beschriebenes Rastelement und ein symmetrisch hierzu ausgestaltetes zweites Rastelement ausgebildet oder angeordnet. Das erste Rastelement ist mit einem ersten Gegenrastelement einer Seitenwand oder deren Fortsatz in Eingriff bringbar. Das zweite Rastelement ist mit einem zweiten Gegenrastelement einer gegenüberliegenden Seitenwange oder deren Fortsatz rastend in Eingriff bringbar.

Bezogen auf die Längsrichtung können die Rastelemente als auch die Gegenrastelemente auf gleicher Höhe angeordnet sein, sodass hier eine bezogen auf die Mittellängsachse von Einsteckteil und Aufnahme spiegelsymmetrische Ausgestaltung von erstem und zweitem Rastelement bzw. von erstem und zweitem Gegenrastelement verwirklicht werden kann.

Mittels erster und zweiter Rastelemente, die in erste und zweite Gegenrastelemente eingreifen kann eine nochmals verbesserte mechanische Verbindung von Aufnahmeteil und Einsteckteil erreicht werden.

Die Zierleiste weist weiter einen ersten Leistenabschnitt und einen zweiten Leistenabschnitt auf. Der erste und der zweite Leistenabschnitt sind in Längsrichtung aneinander angrenzend mittels einer zuvor beschriebenen Steckverbindung lösbar miteinander verbindbar. Der erste Leistenabschnitt kann beispielsweise als Aufnahmeteil fungieren oder als Aufnahmeteil der Steckverbindung ausgestaltet sein.

Der zweite Leistenabschnitt kann demzufolge als Einsteckteil der zuvor beschriebenen Steckverbindung fungieren oder als Einsteckteil der Steckverbindung ausgestaltet sein. Ferner ist denkbar, dass ein gesondertes Einsteckteil an einem Längsende des zweiten Leistenabschnitts angeordnet oder befestigt ist und/oder das ein Aufnahmeteil an einem Längsende des ersten Leistenabschnitts angeordnet oder befestigt ist.

Die Zierleiste ist keineswegs auf lediglich zwei Leistenabschnitte beschränkt. Es können mehrere Steckverbindungen von ersten, zweiten, gegebenenfalls auch dritten und/oder vierten Leistenabschnitten vorgesehen sein, die jeweils mit einer zuvor beschriebenen Steckverbindung miteinander verbindbar sind, um eine längserstreckte Zierleiste zur Anordnung an einer Kraftfahrzeugkarosserie bereitzustellen.

Nach einem weiteren Aspekt betrifft die vorliegende Offenbarung ferner ein Kraftfahrzeug mit einer Kraftfahrzeugkarosserie und mit einer zuvor beschriebenen Zierleiste. Die Zierleiste kann insbesondere als dachseitige Zierleiste ausgestaltet sein, die sich beispielsweise von einer A-Säule bis zu einer B-Säule und/oder bis zu einer C-Säule und/oder bis zu einer D-Säule der Kraftfahrzeugkarosserie erstreckt.

### Kurzbeschreibung der Figuren

Weitere Ziele, Merkmale sowie vorteilhafte Ausgestaltungen der vorliegenden Entwicklung werden in der nachfolgenden Beschreibung eines Ausführungsbeispiels erläutert. Hierbei zeigen:
- Fig. 1: eine schematische Seitenansicht eines Kraftfahrzeugs,
- Fig. 2: eine Ansicht einer Zierleiste von unten im Bereich einer Steckverbindung,
- Fig. 3: eine Darstellung der Steckverbindung gemäß Fig. 2, jedoch in einer Vormontagekonfiguration,
- Fig. 4: eine isolierte perspektivische Darstellung eines Einsteckteils,
- Fig. 5: eine weitere perspektivische Darstellung des Einsteckteils,
- Fig. 6: eine weitere perspektivische Darstellung des Einsteckteils,
- Fig. 7: eine weitere perspektivische Darstellung des Einsteckteils von oben betrachtet,
- Fig. 8: eine perspektivische Innenansicht der Aufnahme des Aufnahmeteils,
- Fig. 9: weitere perspektivische Ansicht der Aufnahme des Aufnahmeteils,
- Fig. 10: eine Draufsicht auf das Einsteckteil von oben betrachtet,
- Fig. 11: eine weitere perspektivische Darstellung des Einsteckteils von schräg oben betrachtet,
- Fig. 12: eine perspektivische Darstellung einer mehrteiligen Zierleiste und
- Fig. 13: einen perspektivische Querschnitt A-A gemäß Fig. 12.

### Detaillierte Beschreibung

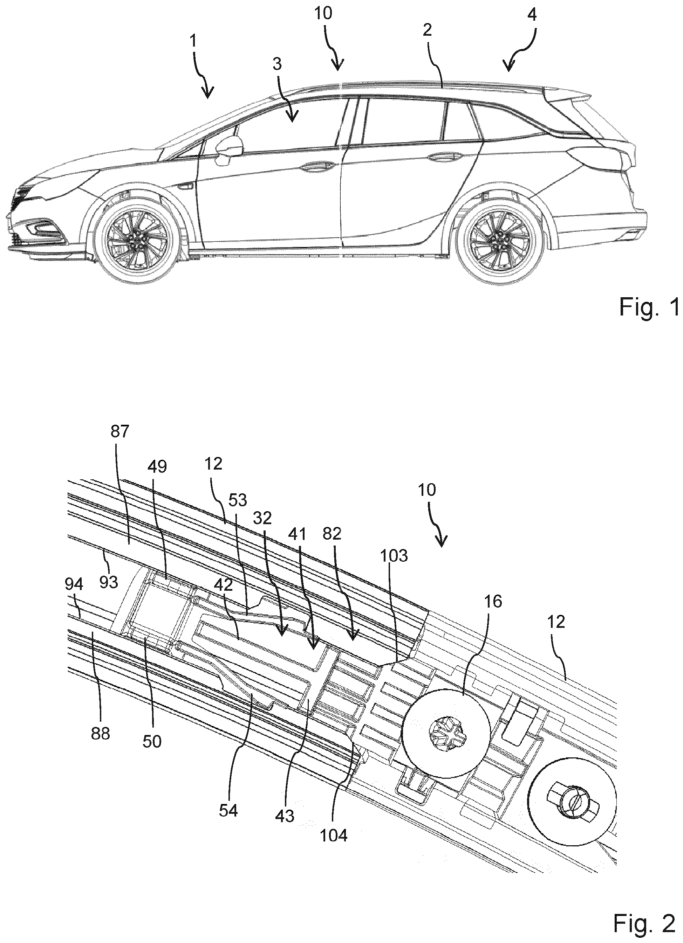

Das in Fig. 1 schematisch dargestellte Kraftfahrzeug 1 weist eine Fahrzeugkarosserie 2 mit einem als Fahrgastzelle fungierenden Innenraum 3 sowie einer sich oberhalb des Innenraums 3 erstreckenden Dachstruktur 4 auf. Im Bereich der Dachstruktur 4, insbesondere im Übergangsbereich von einer Seitenwand der Kraftfahrzeugkarosserie 2 in die Dachstruktur 4 ist am Kraftfahrzeugdach zumindest eine Zierleiste 10 angeordnet.

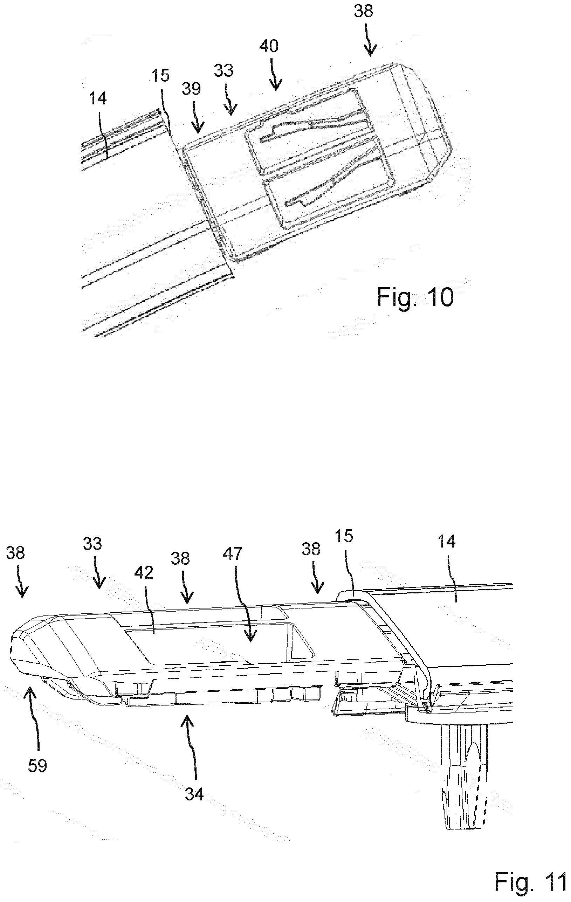

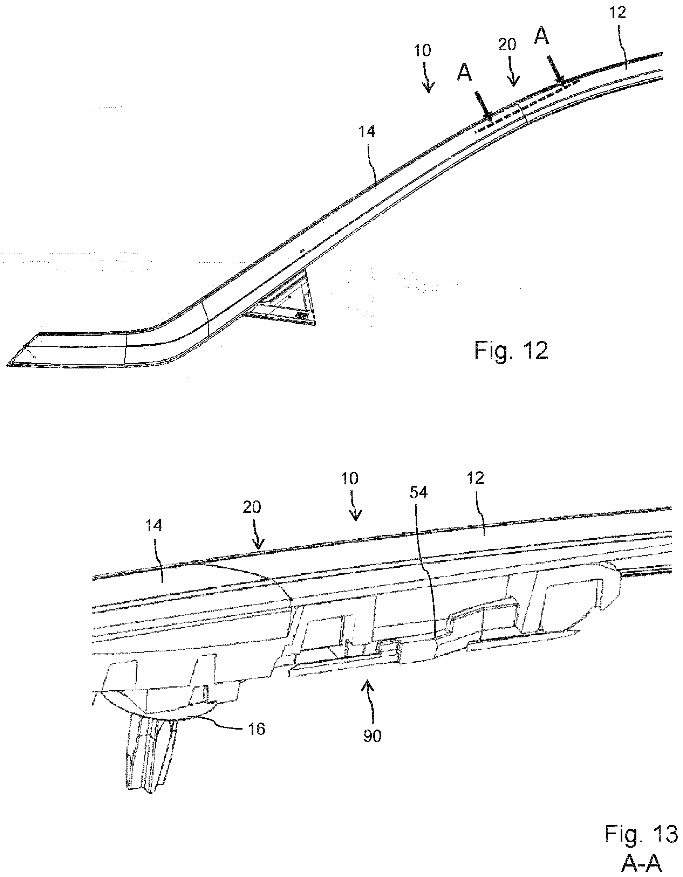

Die zum Beispiel in Fig. 2 ausschnittsweise dargestellte Zierleiste 10 ist mehrteilig ausgestaltet. Sie weist einen ersten Leistenabschnitt 12 und einen in Längsrichtung hieran angrenzenden zweiten Leistenabschnitt 14 auf. Die Leistenabschnitte 12, 14 stoßen stumpf aneinander an. Ein dem zweiten Leistenabschnitt 14 zugewandtes Ende des ersten Leistenabschnitt 12 grenzt an eine Stirnseite 13 des zweiten Leistenabschnitts 12 an; und umgekehrt. Für eine wechselseitige Verbindung der Leistenabschnitte 12, 14 ist eine Steckverbindung 20 vorgesehen, deren Aufbau detaillierter in den Figuren 2 bis 13 dargestellt ist.

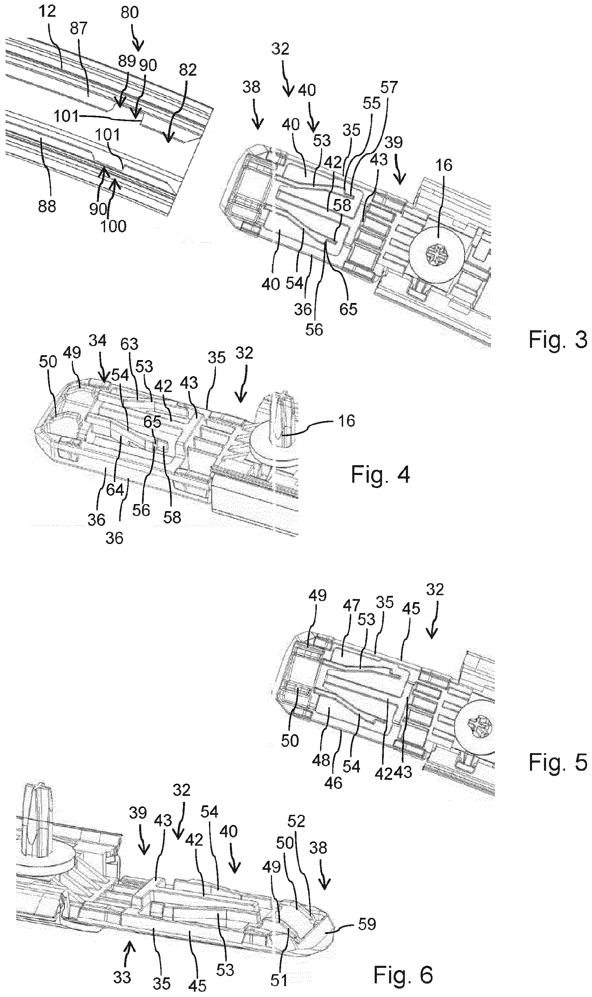

Wie insbesondere aus einer Zusammenschau der Figuren 3 bis 11 verdeutlicht, weist der Leistenabschnitt 12 ein Aufnahmeteil 80 auf. Der Leistenabschnitt 14 weist ein Einsteckteil 30 auf. Das Einsteckteil 30 ist komplementär oder korrespondierend zum Aufnahmeteil 80 ausgebildet. Der Leistenabschnitt 12 weist ein im Querschnitt etwa C-förmiges Profil auf, welches in Endmontagestellung mit einer Stirnseite 13 an einer korrespondierend hierzu ausgestalteten Stirnseite 15 des Leistenabschnitts 14 zur Anlage gelangt.

Während der Leistenabschnitt 12 an einem Längsende mit einer Aufnahme 82 versehen ist und somit der Leistenabschnitt 12 sozusagen als Aufnahmeteil 80 fungiert weist der korrespondierend hierzu ausgestaltete Leistenabschnitt 14 an seinem Längsende einen von einer Stirnseite 15 in Längsrichtung hervorstehenden Einsteckzapfen 32 auf. Insoweit fungiert der Leistenabschnitt 14 als ein mit dem Einsteckzapfen 32 ausgestaltetes Einsteckteil 30. Der Einsteckzapfen 32 ist in Längsrichtung in die Aufnahme 82 einführbar, insbesondere einsteckbar oder gleitend einführbar.

Wie ferner aus der Zusammenschau der Figuren 2 bis 13 hervorgeht, weist der Einsteckzapfen 32 eine Oberseite 33 auf, welche in Endmontagestellung an einer korrespondierend oder komplementär hierzu ausgestalteten Innenseite 84 einer Oberseite 83 der Aufnahme 82 anliegt. Quer zur Längsrichtung geht die Oberseite 33 in gegenüberliegende Außenseiten 35, 36 des Einsteckzapfens 32 über. An den Außenseiten 35, 36 sind Gleitflächen 45, 46 ausgebildet, welche im Zuge der Montage von Einsteckteil 30 und Aufnahmeteil 80 an hierzu komplementär oder korrespondierend ausgestalteten Innenseite gegenüberliegender Seitenwangen 85, 86 der Aufnahme 82 entlanggleiten. Im Zuge der Montage gleitet die Außenseite 36 bzw. deren Gleitfläche 46 an der Innenseite der Seitenwange 86 entlang. Entsprechend gleitet die Außenseite 35 bzw. die Gleitfläche 45 an einer Innenseite der Seitenwange 85 der Aufnahme 82 entlang.

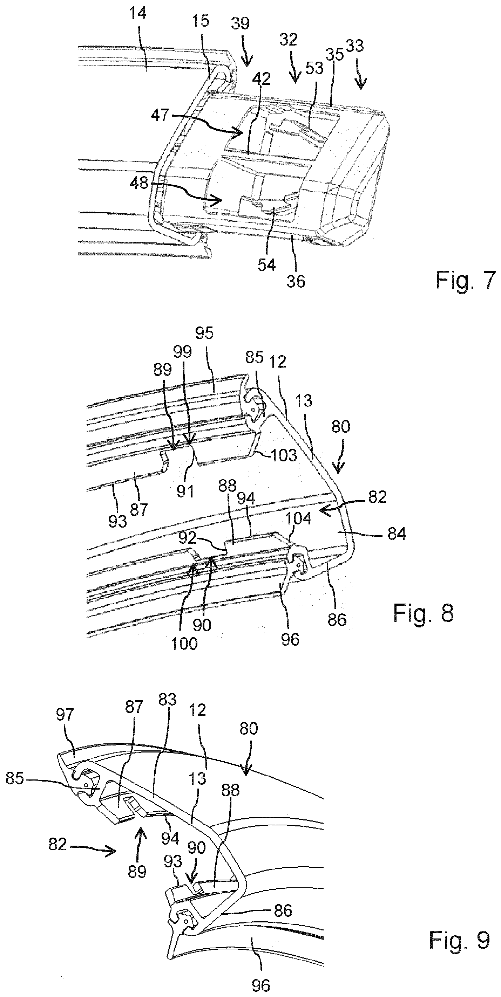

Wie insbesondere in den Figuren 8 und 9 verdeutlicht erstrecken sich an dem der Oberseite 83 abgewandten unteren Ende der Seitenwangen 85, 86 jeweils nach innen und aufeinander zu ragenden Fortsätze 87, 88. Die Fortsätze 87, 88 können sich im Wesentlichen parallel zur Oberseite 83 erstrecken, während sich die Seitenwangen 85, 86 in etwa parallel zu einer Flächennormalen von Oberseite 83 oder der Fortsätze 87, 88 erstrecken.

Die Seitenwangen 85, 86, die Fortsätze 87, 88 und die Oberseite 83 bilden in etwa ein im Querschnitt C-förmiges Profil. Die Außenabmessungen und die Außenkontur des Einsteckzapfens 32 ist korrespondierend zur Innengeometrie der Aufnahme 82 ausgestaltet.

Im Zuge einer Montage und spätestens mit Erreichen einer Endmontagestellung gelangen die nach oben, zur Oberseite 83 gerichteten Innenseiten der Fortsätze 87, 88 außen an der Unterseite 34 des Einsteckzapfens 32 zur Anlage. Auf diese Art und Weise umschließen oder umgreifen die Seitenwangen 85, 86 und die daran ausgebildeten oder einstückig hieran angeformten Fortsätze 87, 88 den Außenrand bzw. die Außenseiten 35, 36 des Einsteckzapfens 32.

Bezüglich einer Hochachse und einer Querachse, welche sich beide in etwa senkrecht zur Längsrichtung der Zierleiste 10 erstrecken, kann auf diese Art und Weise bereits eine formschlüssige wechselseitige Verbindung von Einsteckzapfen 32 und Aufnahme 82 herbeigeführt werden. Für eine wechselseitige Fixierung in Längsrichtung sind an der Unterseite 34 des Einsteckzapfens 32 zwei Rastelemente 53, 54 vorgesehen oder einstückig hieran ausgebildet. Die Rastelemente 53, 54 sind vorliegend als elastische Federzungen 63, 64 ausgestaltet. Die Federzungen 63, 64 bzw. die Rastelemente 53, 54 sind komplementär oder korrespondierend zu Gegenrastelementen 89, 90 im Bereich der Fortsätze 87, 88 ausgestaltet.

Mit Erreichen einer Endmontagekonfiguration gelangt das Rastelement 53 mit dem Gegenrastelement 89 rastend in Eingriff. Gleichzeitig gelangt das Rastelement 54 mit dem gegenüberliegenden Gegenrastelement 90 rastend und demgemäß formschlüssig in Eingriff.

Die Gegenrastelemente 89, 90 sind als Aussparungen 99, 100 in den nach innen ragenden Fortsätze 87, 88 der Seitenwangen 85, 86 ausgebildet. Die Aussparungen 99, 100 sind als Durchgangsöffnungen der Fortsätze 87, 88 ausgestaltet, die an den innenliegenden Innenrand 93, 94 der jeweiligen Fortsätze 87, 88 angrenzen und insoweit eine Randaussparung der Innenränder 93, 94 bilden.

Die Rastelemente 53, 54 stehen von der Unterseite 34 des Einsteckzapfens 32 insoweit hervor, dass sie, bezogen auf eine Hochachse der Zierleiste 10, auf demselben Niveau wie die Fortsätze 87, 88 liegen, während die gegenüberliegende Außenseiten 35, 36 des Einsteckzapfens 32 von den Fortsätzen 87, 88 und den sich hieran anschließenden Seitenwangen 85, 86 in Umfangsrichtung quasi umschlossen sind.

Nach außen abragend von den Seitenwangen 85, 86 ist jeweils eine längserstreckte Dichtlippe 95, 96 aus einem Elastomermaterial angeordnet. Mittels der oder mittels den Dichtlippen 95, 96 kann eine weitreichend abdichtende Anordnung der Zierleiste 10 an der Außenseite der Kraftfahrzeugkarosserie 2 erreicht werden. Die Zierleiste 10, bzw. die Leistenabschnitt 12, 14 als auch das Einsteckteil 30 bzw. das Aufnahmeteil 80 können aus einem thermoplastischen Kunststoff gefertigt sein. Die Zierleiste 10 bzw. deren Leistenabschnitte 12, 14 können als Spritzgussbauteile und/oder als Extrusionsteile gefertigt sein.

Die Rastelemente 53, 54 können gegenüber den Außenseiten 35, 36 jeweils in Querrichtung des Einsteckzapfens 32 zurückversetzt angeordnet sein, sodass sie von den Außenseiten 35, 36 nicht hervorstehen. Wie insbesondere in der Zusammenschau der Figuren 3 bis 7 und 10 dargestellt, weist der Einsteckzapfen 32 einen Kopfabschnitt 38, einen sich hieran in Längsrichtung angrenzenden Mittelabschnitt 40 sowie einen sich in Längsrichtung wiederum hieran angrenzenden Sockelabschnitt 39 auf. Der Kopfabschnitt 38 bildet ein vom Leistenabschnitt 14 entfernten freien Endabschnitt des Einsteckzapfens 32. Der Sockelabschnitt 39 grenzt hingegen an den nach außen vom Einsteckzapfen 32 geringfügig überstehenden Leistenabschnitt 14 in Längsrichtung an.

Kopfabschnitt 38, Sockelabschnitt 39 und Mittelabschnitt 40 können einteilig, beispielsweise als Kunststoffspritzgussbauteil ausgestaltet sein. Sie können einteilig oder mehrteilig mit dem Leistenabschnitt 14 ausgestaltet oder hiermit gesondert verbunden sein. An einer Unterseite des Leistenabschnitts 14 ist ferner ein Befestigungselement 60 gezeigt, welches zum Beispiel als Befestigungsclips ausgebildet ist und der Montage an einer hierzu korrespondierend ausgestaltete Befestigungsstelle der Kraftfahrzeugkarosserie 2 dient.

Die Rastelemente 53, 54 sind mit einem Sockel am Kopfabschnitt 38 angeordnet oder hieran angeformt. Die Rastelemente 53, 54 erstrecken sich mit ihrem freien Ende in den Mittelabschnitt 40 hinein. Sie weisen zum Sockelabschnitt 39 hin. Am freien Ende weisen die Rastelemente 53, 54 jeweils einen Endanschlag 55, 56 auf. Jeder der beiden Endanschläge 55, 56 weist eine Anschlagsfläche 65 auf, welche dem Sockelabschnitt 39 zugewandt ist, bzw. deren Flächennormale sich in Längsrichtung des Einsteckteils 30 entgegen der Montagerichtung des Einsteckteils 30 in das Aufnahmeteil 80 erstreckt.

Das am Aufnahmeteil 80 ausgestaltete Gegenrastelement 89, 90 weist einen hierzu korrespondierend ausgestalteten Gegenanschlag 91, 92 auf. Der Gegenanschlag 91, 92 weist eine Anschlagsfläche 101 mit einer Flächennormalen auf, die sich Wesentlichen in Montagerichtung in Längsrichtung erstreckt.

Auf diese Art und Weise und mit Erreichen einer Endmontagestellung, wie sie beispielsweise in Fig. 2 gezeigt ist stützen sich die Gegenrastelemente 53, 54 mit ihren an den Endanschlägen 55, 56 vorgesehenen Anschlagsfläche 65 an den hierzu komplementär ausgestalteten Anschlagsflächen 101 der Gegenanschläge 91, 92 ab. Auf diese Art und Weise kann der Leistenabschnitt 12 in Längsrichtung am Leistenabschnitt 14 fixiert werden.

Mit Erreichen der Endmontagekonfiguration ist ferner die Stirnseite 13 des Leistenabschnitts 12 mit der Stirnseite 15 des Leistenabschnitt 14 in Anlagestellung. Die wechselseitige Anlagestellung kann eine Art Presssitz erforderlich machen, sodass die Stirnseiten 13, 15 möglichst ohne nennenswerten Spalt, auf jeden Fall aber spielfrei in Längsrichtung fest aneinander anliegen, wenn die Rastelemente 53, 54 mit den Gegenrastelementen 89, 90 formschlüssig verrasten.

In den Figuren 2 und 3 ist ferner gezeigt, dass an den Außenseiten der freien Enden der Rastelemente 53, 54, bzw. der Federzungen 63, 64 jeweils eine Anlagefläche 57, 58 ausgebildet ist, welche in Querrichtung nach außen weist und welche mit Erreichen der Endmontagestellung an dem an das betreffende Gegenrastelement 89, 90 angrenzenden Innenrand 93, 94 des jeweiligen Fortsatzes 87, 88 zur Anlage gelangt. Die in Querrichtung an den Innenrändern 93, 94 zur Anlage gelangenden Anlageflächen 57, 58 bewirken, dass die Rastelemente 53, 54 mit den Gegenrastelementen 89, 90 in Anlagestellung bleiben und nicht zu weit in die von den Gegenrastelementen 89, 90 gebildeten Aussparungen 99, 100 eintauchen.

Wie insbesondere in Fig. 2 gezeigt sind die Gegenrastelemente 53, 54 von unten her zugänglich. Bei einer aus mehreren Leistenabschnitten 12, 14 zusammengesetzten Zierleiste 10, welche beispielsweise von der Kraftfahrzeugkarosserie 2 demontiert ist, kann in besonders einfacher Art und Weise durch die Zugänglichkeit zu den Rastelementen 53, 54 eine Lösestellung herbeigeführt werden, indem die Rastelemente 53, 54 aufeinander zu und nach innen bewegt werden. Die Verrastung kann alsdann aufgehoben und der Einsteckzapfen 32 kann entgegen der Montagerichtung aus der Aufnahme 82 herausgezogen werden.

An der Unterseite 34 des Einsteckzapfens 32 sind ferner zwei von der Unterseite 34 hervorstehende Stege 49, 50 im Kopfabschnitt 38 angeordnet bzw. am Einsteckzapfen 32 ausgebildet. Zum freien Ende hin kann der Kopfabschnitt 38 eine Fase 59 oder Anlaufschräge aufweisen, die es ferner ermöglicht, dass das Einsteckteil 30 nicht nur vor einer Montage am Kraftfahrzeug 1 mit den Aufnahmeteil 80 verbindbar ist sondern dass auch das Einsteckteil 30 in die Aufnahme 82 eines bereits an der Kraftfahrzeugkarosserie 2 befestigten Aufnahmeteils 80 einführbar ist. Ein initiales Einführen des Einsteckteils 30 in das Aufnahmeteil 80 kann unter einem vorgegebenen Winkel, beispielsweise unter dem Winkel der Fase 59 am freien Ende des Kopfabschnitts 38 erfolgen.

Die Stege 49, 50 können zum freien Ende des Kopfabschnitts 38 hin eine sich verjüngende Anlaufschräge 51, 52 aufweisen. Die Stege 50, 51 können ferner etwa in geradliniger Verlängerung des kopfabschnittseitigen Endes der Rastelemente 53, 54 angeordnet oder ausgerichtet sein. Wie ferner in Fig. 2 gezeigt, können die Außenseiten der Stege 49, 50 an den einander zugewandten Innenrändern 93, 94 der Fortsätze 87, 88 anliegen und so zu einer weiteren Zentrierung von Einsteckteil 30 und Aufnahmeteil 80 beitragen.

Des Weiteren kann an der Unterseite 34 des Einsteckteils 30 ein strukturverstärkender Steg 41 ausgebildet sein. Der Steg 41 kann sich, wie insbesondere in den Figuren 3 bis 6 gezeigt, vom Kopfabschnitt 38 bis in den Sockelabschnitt 39 hinein erstrecken. Der Steg 41 kann eine Aussparung 47, bzw. 48 des Mittelabschnitt 40 in Längsrichtung durchsetzen und insoweit zwei den Mittelabschnitt 40 in Längsrichtung in die beide seitlich hieran angrenzenden Aussparungen 47, 48 unterteilen. Die Aussparungen 47, 48 sind nach außen hin von den Außenseiten 35, 36 begrenzt, welche insoweit ebenfalls als Verbindungsstege zwischen dem Kopfabschnitt 38 und dem Sockelabschnitt 39 fungieren.

Der Steg 41 kann ein C-förmiges Profil aufweisen. Der Steg 41 kann einen längserstreckten Stegabschnitt 42 aufweisen, der sich in Längsrichtung vom Kopfabschnitt 38 in den Sockelabschnitt 39 erstreckt. Im oder angrenzend an den Sockelabschnitt 39 kann der Steg 41 in einem in Querrichtung verbreiterten Stegabschnitt 43 übergehen. Die den gegenüberliegenden Außenseiten 35, 36 zugewandten Stirnflächen des Stegabschnitt 43 können ebenfalls an den Innenrändern 93, 94 der Seitenwangen 85, 86 bzw. deren Fortsätze 87, 88 gleitend zur Anlage gelangen. Wie ferner in Fig. 2 gezeigt können die Fortsätze 87, 88 zu ihrem Längsende hin, d. h. angrenzend an die Stirnseite 30 der Aufnahme 82 jeweils eine schräg nach innen ragende Anlaufschräge 103, 104 aufweisen, mittels derer ein besonders einfaches Einführen der Stege 49, 50, der Rastelemente 53, 54 als auch des Stegabschnitts 43 in den Bereich zwischen den Seitenwangen 85, 86, insbesondere in den Bereich zwischen den Fortsätzen 87, 88 erfolgen kann.

Insbesondere der Mittelabschnitt 40, welcher auch als Käfigstruktur bezeichnet werden kann, ermöglicht in gewissen Grenzen eine flexible Deformation des Einsteckzapfens 32, so können auch nach Montage etwaige Toleranzen am Fahrzeug ausgeglichen werden. Etwaigen, durch Bauteiltoleranzen bei der Herstellung entstehenden Biegekräften kann insoweit besonders einfach und effektiv entgegengewirkt werden. Im Endeffekt kann mittels der hier vorgeschlagenen Steckverbindung 20 eine besonders einfache wechselseitige Steckverbindung von Leistenabschnitten 12, 14 einer Zierleiste 10 bereitgestellt werden, die mit nur geringem Kraftaufwand erreicht werden kann. Sie ermöglicht ferner eine schnelle Montage bei zugleich hohen Haltekräften. Ferner kann sie zerstörungsfrei gelöst werden. Es können verschiedenste Montageszenarien verwirklicht werden und die Steckverbindung ermöglicht zudem eine exakte Positionierung und maßhaltige sowie dauerhaltbare Anordnung der Zierleiste 10 an einer Kraftfahrzeugkarosserie 2.

Die dargestellten Ausführungsformen zeigen lediglich mögliche Ausgestaltungen der Entwicklung, zu welcher im Rahmen der Entwicklung weitere zahlreiche Varianten denkbar sind. Die exemplarisch gezeigten Ausführungsbeispiele sind in keiner Weise hinsichtlich des Umfangs, der Anwendbarkeit oder der Konfigurationsmöglichkeiten der Entwicklung als einschränkend auszulegen. Die vorliegende Beschreibung zeigt dem Fachmann lediglich eine oder einige mögliche Implementierung(en) eines Ausführungsbeispiels auf. So können an der Funktion und Anordnung von beschriebenen Elementen vielfältigste Modifikationen vorgenommen werden, ohne hierbei den durch die nachfolgenden Ansprüche definierten Schutzbereich oder dessen Äquivalente zu verlassen.

### Bezugszeichenliste

- 1: Kraftfahrzeug
- 2: Kraftfahrzeugkarosserie
- 3: Innenraum
- 4: Dachstruktur
- 10: Zierleiste
- 12: Leistenabschnitt
- 13: Stirnseite
- 14: Leistenabschnitt
- 15: Stirnseite
- 16: Befestigungselement
- 20: Steckverbindung
- 30: Einsteckteil
- 32: Einsteckzapfen
- 33: Oberseite
- 34: Unterseite
- 35: Außenseite
- 36: Außenseite
- 38: Kopfabschnitt
- 39: Sockelabschnitt
- 40: Mittelabschnitt
- 41: Steg
- 42: Stegabschnitt
- 43: Stegabschnitt
- 45: Gleitfläche
- 46: Gleitfläche
- 47: Aussparung
- 48: Aussparung
- 49: Steg
- 50: Steg
- 51: Anlaufschräge
- 52: Anlaufschräge
- 53: Rastelement
- 54: Rastelement
- 55: Endanschlag
- 56: Endanschlag
- 57: Anlagefläche
- 58: Anlagefläche
- 59: Fase
- 63: Federzunge
- 64: Federzunge
- 65: Anschlagsfläche
- 80: Aufnahmeteil
- 82: Aufnahme
- 83: Oberseite
- 84: Innenseite
- 85: Seitenwange
- 86: Seitenwange
- 87: Fortsatz
- 88: Fortsatz
- 89: Gegenrastelement
- 90: Gegenrastelement
- 91: Gegenanschlag
- 92: Gegenanschlag
- 93: Innenrand
- 94: Innenrand
- 95: Dichtlippe
- 96: Dichtlippe
- 99: Aussparung
- 100: Aussparung
- 101: Anschlagsfläche
- 103: Anlaufschräge
- 104: Anlaufschräge

## Patentansprüche

1. Mehrteilige Zierleiste (10) zur Anordnung an einer Kraftfahrzeugkarosserie (2), mit einem ersten Leistenabschnitt (12) und mit einem zweiten Leistenabschnitt (14), welche in Längsrichtung aneinander angrenzend mittels einer Steckverbindung (20) verbindbar sind, wobei die Steckverbindung (20) ein Einsteckteil (30) und ein Aufnahmeteil (80) aufweist, wobei das Einsteckteil (30) einen längserstreckten Einsteckzapfen (32) aufweist, welcher in Längsrichtung in eine korrespondierend zum Einsteckzapfen (32) ausgebildete Aufnahme (82) des Aufnahmeteils (80) einführbar ist, wobei der Einsteckzapfen (32) eine Oberseite (33) und eine gegenüberliegende Unterseite (34) sowie zwei zueinander gegenüberliegende Außenseiten (35, 36) aufweist, die sich zwischen der Oberseite (33) und der Unterseite (34) erstrecken, wobei die Aufnahme (82) eine Oberseite (83) und zwei hieran angrenzende, zueinander gegenüberliegende Seitenwangen (85, 86) aufweist, welche der Oberseite (83) abgewandt jeweils einen zur gegenüberliegenden Seitenwange weisenden Fortsatz (87, 88) aufweisen, und wobei an der Unterseite (34) des Einsteckzapfens (32) zumindest ein Rastelement (53, 54) ausgebildet oder angeordnet ist, welches zur Bildung einer formschlüssigen Verbindung von Einsteckteil (30) und Aufnahmeteil (80) mit einem korrespondierend zum Rastelement (53, 54) ausgebildeten Gegenrastelement (89, 90) rastend in Eingriff bringbar ist, wobei das Gegenrastelement (89, 90) an zumindest einer der Seitenwangen (85, 86) oder an zumindest einem der Fortsätze (87, 88) vorgesehen, ausgebildet oder angeordnet ist, **dadurch gekennzeichnet, dass** das zumindest eine Rastelement (53, 54) gegenüber den gegenüberliegenden Außenseiten (35, 36) des Einsteckzapfens (32) zurückversetzt angeordnet ist und wobei das zumindest eine Gegenrastelement (89, 90) an einem Innenrand (93, 94) des Fortsatzes (87, 88) angeordnet oder ausgebildet ist.

2. Mehrteilige Zierleiste (10) nach Anspruch 1, wobei das Rastelement (53, 54) zumindest eine quer oder senkrecht zur Längsrichtung bewegliche oder deformierbare Federzunge (63, 64) mit einem Endanschlag (55, 56) aufweist.

3. Mehrteilige Zierleiste (10) nach Anspruch 2, wobei der Endanschlag (55, 56) eine Anschlagsfläche (65) mit einer Flächennormalen aufweist, die in Längsrichtung entgegen einer Einführrichtung des Einsteckteils (30) in das Aufnahmeteil (80) ausgerichtet ist.

4. Mehrteilige Zierleiste (10) nach einem der vorhergehenden Ansprüche, wobei das Gegenrastelement (89, 90) zumindest eine sich quer oder senkrecht zur Längsrichtung erstreckende Aussparung (99, 100) mit einem Gegenanschlag (91, 92) aufweist.

5. Mehrteilige Zierleiste (10) nach Anspruch 4, wobei der Gegenanschlag (91, 92) eine Anschlagsfläche (101) mit einer Flächennormalen aufweist, die in Längsrichtung entlang der Einführrichtung des Einsteckteils (30) in das Aufnahmeteil (80) ausgerichtet ist.

6. Mehrteilige Zierleiste (10) nach einem der vorhergehenden Ansprüche, wobei der Einsteckzapfen (32) einen Sockelabschnitt (39) aufweist, der in Längsrichtung über einen Mittelabschnitt (40) in einen Kopfabschnitt (38 übergeht, wobei der Kopfabschnitt (38) ein freies Ende des Einsteckzapfens (32) bildet und wobei das zumindest eine Rastelement (53, 54) am Kopfabschnitt (38) angeordnet ist und sich in Längsrichtung in den Mittelabschnitt (40) hinein erstreckt.

7. Mehrteilige Zierleiste (10) nach Anspruch 6, wobei an dem Kopfabschnitt (38) zumindest ein sich von der Unterseite (34) erstreckender Steg (49, 50) mit einer Anlaufschräge (51, 52) angeordnet oder ausgebildet ist.

8. Mehrteilige Zierleiste (10) nach Anspruch 7, wobei der zumindest eine Steg (49, 50) mit einem Innenrand (93, 94) des Fortsatzes (87, 88) gleitend in Eingriff bringbar ist.

9. Mehrteilige Zierleiste (10) nach einem der vorhergehenden Ansprüche 6 bis 8, wobei der Mittelabschnitt (40) einen längserstreckten Steg (41) aufweist, welcher sich vom Kopfabschnitt (38) in den Sockelabschnitt (39) erstreckt.

10. Mehrteilige Zierleiste (10) nach Anspruch 9, wobei der Steg (41) im Bereich des Sockelabschnitts (39) einen sich quer oder senkrecht zur Längsrichtung erstreckende Stegabschnitt (43) aufweist, welcher in Montagestellung von Einsteckteil (30) und Aufnahmeteil (80) an den zueinander gegenüberliegenden Innenseiten der Fortsätze (87, 88) anliegt.

11. Mehrteilige Zierleiste (10) nach einem der vorhergehenden Ansprüche, wobei die Oberseite (33) des Einsteckzapfens (32) gleitend mit der Innenseite (84) der Oberseite (83) der Aufnahme (82) in Eingriff bringbar ist und/oder wobei die gegenüberliegenden Außenseiten (35, 36) des Einsteckzapfens (32) gleitend mit den Innenseiten der Seitenwangen (85, 86) der Aufnahme (82) des Aufnahmeteils (80) in Eingriff bringbar sind.

12. Mehrteilige Zierleiste (10) nach einem der vorhergehenden Ansprüche, wobei an der Unterseite (34) des Einsteckzapfen (32) ein erstes Rastelement (53) und ein symmetrisch hierzu ausgestaltetes zweites Rastelement (54) ausgebildet oder angeordnet sind, wobei das erste Rastelement (53) mit einem ersten Gegenrastelement (89) einer Seitenwangen (85) oder deren Fortsatz (87) und das zweite Rastelement (54) mit einem zweiten Gegenrastelement (90) einer gegenüberliegenden Seitenwangen (86) oder deren Fortsatz (88) rastend in Eingriff bringbar ist.

13. Kraftfahrzeug mit einer Kraftfahrzeugkarosserie (2) und mit einer mehrteiligen Zierleiste (10) nach einem der vorherigen Ansprüche.

## Claims

1. Multi-part decorative strip (10) for arrangement on a motor vehicle body (2), comprising a first strip section (12) and a second strip section (14), which are longitudinally adjacent to one another by means of a plug connection (20), the plug connection (20) comprising an insertion part (30) and a receiving part (80), wherein the insertion part (30) has a longitudinally extended insertion pin (32) which can be inserted longitudinally into a receptacle (82) of the receiving part (80) corresponding to the insertion pin (32), the insertion pin (32) having a top (33) and an opposite bottom (34) as well as two opposing outer surfaces (35, 36) extending between the top (33) and the bottom (34), the receiving part (82) having a top (83) and two adjacent, opposite side cheeks (85, 86) which each have a projection (87, 88) facing away from the top side (83) and pointing towards the opposite side cheek, and wherein at least one locking element (53, 54) is formed or arranged on the underside (34) of the insertion pin (32), which can be engaged in a positive-locking manner with a corresponding counter-locking element (89, 90) formed to form a positive-locking connection between the insertion part (30) and the receiving part (80), the counter-locking element (89, 90) being provided, formed, or arranged on at least one of the side cheeks (85, 86) or on at least one of the projections (87, 88), **characterized in that** the at least one locking element (53, 54) faces the opposite outer sides (35, 36) of the insertion pin (32) is recessed, and the at least one counter-locking element (89, 90) is arranged or formed on an inner edge (93, 94) of the extension (87, 88).

2. Multi-part decorative strip (10) according to claim 1, wherein the locking element (53, 54) has at least one spring tongue (63, 64) movable or deformable transversely or perpendicular to the longitudinal direction with an end stop (55, 56).

3. Multi-part decorative strip (10) according to claim 2, wherein the end stop (55, 56) has a stop surface (65) with a surface normal that is oriented in the longitudinal direction opposite an insertion direction of the insertion part (30) into the receiving part (80).

4. Multi-part decorative strip (10) according to any of the preceding claims, wherein the counter-locking element (89, 90) has at least one recess (99, 100) extending transversely or perpendicularly to the longitudinal direction with a counter-stop (91, 92).

5. Multi-part decorative strip (10) according to claim 4, wherein the counter-stop (91, 92) has a stop surface (101) with a surface normal that is aligned in the longitudinal direction along the insertion direction of the insert part (30) into the receiving part (80).

6. Multi-part decorative strip (10) according to any one of the preceding claims, wherein the insert pin (32) has a base section (39) which extends longitudinally over a central section (40) into a head section (38), wherein the head section (38) forms a free end of the insert pin (32) and wherein at least one locking element (53, 54) is arranged on the head section (38) and extends longitudinally into the central section (40).

7. Multi-part decorative strip (10) according to claim 6, wherein at least one web (49, 50) extending from the underside (34) with a chamfer (51, 52) is arranged or formed on the head section (38).

8. Multi-part decorative strip (10) according to claim 7, wherein the at least one web (49, 50) has an inner edge (93, 94) of the The extension (87, 88) can be slidably engaged.

9. Multi-part decorative strip (10) according to any one of the preceding claims 6 to 8, wherein the central section (40) has a longitudinally extending web (41) which extends from the head section (38) into the base section (39).

10. Multi-part decorative strip (10) according to claim 9, wherein the web (41) in the region of the base section (39) has a web section (43) extending transversely or perpendicularly to the longitudinal direction, which, in the assembly position of the insertion part (30) and the receiving part (80), bears against the opposing inner surfaces of the extensions (87, 88).

11. Multi-part decorative strip (10) according to any one of the preceding claims, wherein the upper surface (33) of the insertion pin (32) slidably engages with the inner surface (84) of the upper surface (83) of the receiving part. (82) is capable of being brought into engagement and/or wherein the opposite outer sides (35, 36) of the insertion pin (32) are capable of being brought into engagement with the inner sides of the side walls (85, 86) of the receptacle (82) of the receiving part (80).

12. Multi-part decorative strip (10) according to one of the preceding claims, wherein a first locking element (53) and a symmetrically designed second locking element (54) are formed on the underside (34) of the insertion pin (32).

13. Motor vehicle comprising a motor vehicle body (2) and a multi-part decorative strip (10) according to any one of the preceding claims.

## Revendications

1. Bande décorative multi-éléments (10) destinée à être disposée sur la carrosserie d'un véhicule automobile (2), comprenant : une première section de bande (12) et une seconde section de bande (14), adjacentes longitudinalement par un connecteur (20). Ce connecteur (20) comprend une partie d'insertion (30) et une partie de réception (80). La partie d'insertion (30) est munie d'une tige d'insertion longitudinale (32) pouvant s'insérer longitudinalement dans un logement (82) de la partie de réception (80) correspondant à la tige d'insertion (32). La tige d'insertion (32) présente une extrémité supérieure (33) et une base opposée (34), ainsi que deux surfaces extérieures opposées (35, 36) s'étendant entre l'extrémité supérieure (33) et la base (34). La partie de réception (82) présente une extrémité supérieure (83) et deux joues latérales adjacentes et opposées (85, 86), chacune présentant une saillie (87, 88) orientée vers l'extérieur. la face supérieure (83) pointant vers la joue latérale opposée, et dans laquelle au moins un élément de verrouillage (53, 54) est formé ou disposé sur la face inférieure (34) de la tige d'insertion (32), qui peut s'engager de manière positive avec un élément de contre-verrouillage correspondant (89, 90) formé pour former une liaison de verrouillage positive entre la partie d'insertion (30) et la partie réceptrice (80), l'élément de contre-verrouillage (89, 90) étant prévu, formé ou disposé sur au moins une des joues latérales (85, 86) ou sur au moins une des saillies (87, 88), **caractérisé en ce que** l'élément de verrouillage (53, 54) fait face aux côtés extérieurs opposés (35, 36) de la tige d'insertion (32) est en retrait, et l'élément de contre-verrouillage (89, 90) est disposé ou formé sur un bord intérieur (93, 94) de l'extension (87, 88).

2. Bande décorative multi-parties (10) selon la revendication 1, dans laquelle l'élément de verrouillage (53, 54) comporte au moins une languette à ressort (63, 64) mobile ou déformable transversalement ou perpendiculairement à la direction longitudinale et munie d'une butée (55, 56).

3. Bande décorative multi-parties (10) selon la revendication 2, dans laquelle la butée (55, 56) présente une surface d'arrêt (65) dont la normale est orientée longitudinalement à l'opposé de la direction d'insertion de la partie d'insertion (30) dans la partie réceptrice (80).

4. Bande décorative multi-parties (10) selon l'une quelconque des revendications précédentes, dans laquelle l'élément de contre-verrouillage (89, 90) comporte au moins un évidement (99, 100) s'étendant transversalement ou perpendiculairement à la direction longitudinale et muni d'une contre-butée (91, 92).

5. Bande décorative multi-éléments (10) selon la revendication 4, dans laquelle la butée (91, 92) présente une surface d'arrêt (101) dont la normale est alignée longitudinalement dans le sens d'insertion de la partie d'insertion (30) dans la partie réceptrice (80).

6. Bande décorative multi-éléments (10) selon l'une quelconque des revendications précédentes, dans laquelle la tige d'insertion (32) présente une section de base (39) qui s'étend longitudinalement au-dessus d'une section centrale (40) pour se terminer par une section de tête (38), cette dernière formant l'extrémité libre de la tige d'insertion (32) et comportant au moins un élément de verrouillage (53, 54) disposé sur la section de tête (38) et s'étendant longitudinalement dans la section centrale (40).

7. Bande décorative multi-éléments (10) selon la revendication 6, dans laquelle au moins une nervure (49, 50) s'étendant depuis la face inférieure (34) et présentant un chanfrein (51, 52) est disposée ou formée sur la partie supérieure (38).

8. Bande décorative multi-éléments (10) selon la revendication 7, dans laquelle la ou les nervures (49, 50) présentent un bord intérieur (93, 94) permettant un coulissement de l'extension (87, 88).

9. Bande décorative multi-éléments (10) selon l'une quelconque des revendications 6 à 8 précédentes, dans laquelle la section centrale (40) comporte une nervure s'étendant longitudinalement (41) depuis la partie supérieure (38) jusqu'à la partie inférieure (39).

10. Bande décorative multi-éléments (10) selon la revendication 9, dans laquelle l'âme (41) au niveau de la section de base (39) présente une section d'âme (43) s'étendant transversalement ou perpendiculairement à la direction longitudinale, laquelle, en position d'assemblage de la partie d'insertion (30) et de la partie de réception (80), s'appuie contre les surfaces intérieures opposées des extensions (87, 88).

11. Bande décorative multi-éléments (10) selon l'une quelconque des revendications précédentes, dans laquelle la surface supérieure (33) de la tige d'insertion (32) coulisse contre la surface intérieure (84) de la surface supérieure (83) de la partie de réception. (82) peut être mis en contact et/ou dans lequel les faces extérieures opposées (35, 36) de la goupille d'insertion (32) peuvent être mises en contact avec les faces intérieures des parois latérales (85, 86) du réceptacle (82) de la partie réceptrice (80).

12. Bande décorative en plusieurs parties (10) selon l'une des revendications précédentes, dans laquelle un premier élément de verrouillage (53) et un second élément de verrouillage symétrique (54) sont formés sur la face inférieure (34) de la goupille d'insertion (32).

13. Véhicule automobile comprenant une carrosserie de véhicule automobile (2) et une bande décorative en plusieurs parties (10) selon l'une des revendications précédentes.
